# EUROPEAN PATENT APPLICATION

(11) **EP 2 106 144 A1**
(43) Date of publication of application: **30.09.2009**
(21) Application number: 08169508.2
(22) Date of filing: 20.11.2008
(51) Int. Cl.: H04N 7/26

(54) **Method, apparatus, and system for inserting a recovery point in a moving image**

(30) Priority: 24.03.2008 JP 2008076391; 17.04.2008 JP 2008108241
(71) Applicant: Fujitsu Limited, Kawasaki-shi, Kanagawa 211-8588 (JP)
(72) Inventor: Bhavani, Susarla Lalitha, Kanagawa 211-8588 (JP); Nakagawa, Akira, Kanagawa 211-8588 (JP); Kobayashi, Shunsuke, Fukuoka 814-8588 (JP)
(74) Representative: HOFFMANN EITLE

(57) **Abstract**

A moving image processing system includes an encoding apparatus encoding a moving image by encoding a picture order count (POC) while inserting a recovery point, and a decoding apparatus decoding the moving image encoded by the encoding apparatus. The encoding apparatus includes an insertion permission/rejection determining unit that determines whether a decoded frame is a reference frame and its frame number from an instantaneous decoding refresh frame is a positive integer times as large as a number of reference frames within a POC cycle, and a recovery point inserting unit that inserts the recovery point into the frame depending on a result of determination by the insertion permission/rejection determining unit. The decoding apparatus includes a POC decoding unit that decodes the POC by executing an initializing process such that the frame number within the POC cycle used in decoding the POC becomes zero, when decoding by random accessing is started.

## Description

### CROSS-REFERENCE TO RELATED APPLICATION

This application is based upon and claims the benefit of priority of the prior Japanese Patent Application No. 2008-108241, filed on April 17, 2008; and Japanese Patent Application No. 2008-076391, filed on March 24, 2008, the entire contents of both of which are incorporated herein by reference.

### FIELD

The embodiment(s) discussed herein is(are) directed to a technique for processing moving images.

### BACKGROUND

In the H.264/MPEG-4 AVC standard, a POC (Picture Order Count) is a parameter that indicates the order of displaying frames and fields. The POC is used for determination of the initial order of a reference picture in decoding of a B picture. The POC also indicates the difference in the picture order between frames or fields concerning the calculation of motion vectors in a time direct mode. The POC is also used for implicit mode weighted prediction of the B picture and a compatibility check of a decoder. Therefore, the POC needs to be correctly decoded.

The POC is decoded in any one of three kinds of method depending on the type of the POC. The decoding method of type 1 is explained in section 8.2.1.2 of the H.264/MPEG-4 AVC standard (see, e.g., H.264 Advanced Video Coding for Generic Audiovisual Services, ITU-T Standard).

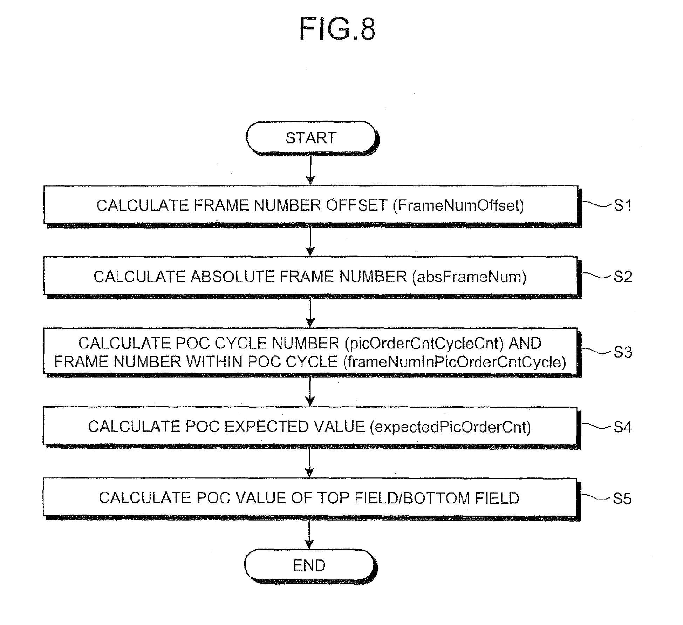

Fig. 8 is a flowchart of the process procedure of a conventional POC decoding process based on the H.264/MPEG-4 AVC standard. As depicted in Fig. 8, in the conventional POC decoding process, the decoder calculates a frame number offset (FrameNumOffset) (Step S1).

The frame number offset is an offset value of a frame number (frame_num) relative to the newest IDR frame (Instantaneous Decoding Refresh frame). Each frame has a relative number from the IDR frame. The relative number is calculated from the frame number (0 to MaxFrameNum: the frame number maximal value) and the frame number offset. The frame number is a number that is counted up when the reference frame appears and that is not counted up when non-reference frame appears.

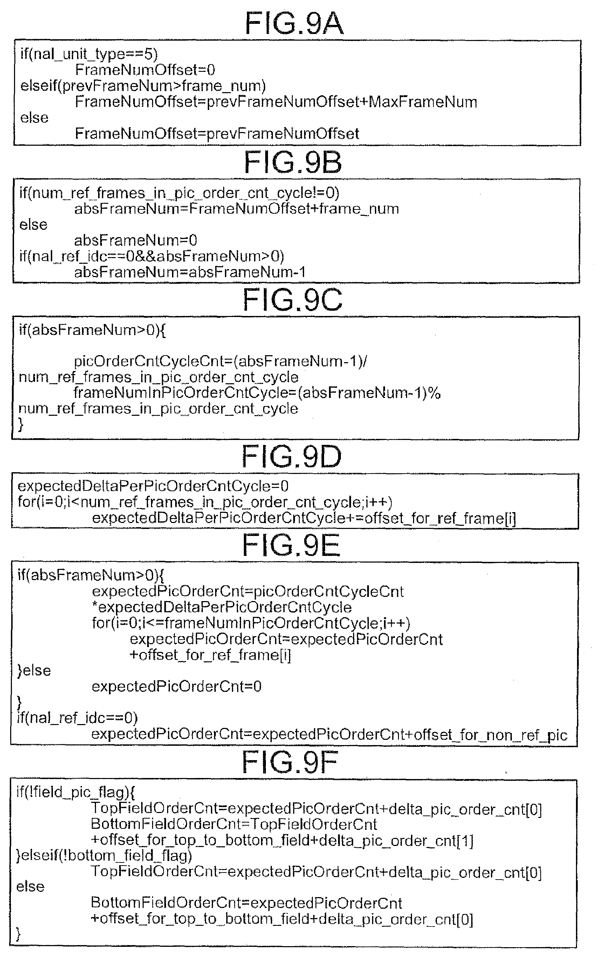

Fig. 9A lists codes for calculating the frame number offset. In Fig. 9A, "nal_unit_type==5" represents that a frame is an IDR frame, "prevFrameNum" is the frame number of the immediately previous frame, and "prevFrameNumOffset" is a frame number offset of the immediately previous frame.

The decoder calculates an absolute frame number (absFrameNum) from the frame number offset (Step S2). The absolute frame number is a relative number from the newest IDR frame. The term "absolute" is used herein meaning that the absolute frame number is a number that does not use the frame number offset.

Fig. 9B lists codes for calculating an absolute frame number. In Fig. 9B, num_ref_frames_in_pic_order_cnt_cycle, that is, the number of reference frames within a POC cycle is a constant that indicates the number of reference frames within a POC cycle. On the other hand, "nal_ref_idc==0" represents that a frame is a non-reference frame. A POC cycle is a repetitive group of a reference frame and a non-reference frame.

The decoder calculates the POC cycle number (picOrderCntCycleCnt) and the frame number within a POC cycle (frameNumInPicOrderCntCycle) (Step S3). The frame number within a POC cycle is a number that indicates the position of a frame within a POC cycle and that takes a value from zero to the number of the reference frames within the POC cycle. This frame number within a POC cycle is a very important variable that is used for calculating the value of the reference frame offset (offset_for_ref_frame) used for accessing a list of the reference frames in a POC cycle. Fig. 9C lists codes for calculating a POC cycle number and a frame number within a POC cycle.

The decoder calculates a POC expected value (expectedPicOrderCnt) (Step S4). The POC expected value of a reference frame is calculated from an offset value given from the delta expected value of the POC cycle (expectedDeltaPerPicOrderCntCycle), the POC cycle number, and an offset list corresponding to the reference frame (offset_for_ref_frame[i]). In this case, the delta expected value of each POC cycle is calculated as a sum of the offset values for the reference frame of the POC cycle.

The offset value for the non-reference frame of the POC cycle is used for the POC expected value of a non-reference frame. Fig. 9D lists codes for calculating the delta expected value of each POC cycle. Fig. 9E lists codes for calculating the POC expected value.

The decoder calculates the POC value of the top field/bottom field (Step S5). Fig. 9F lists codes for calculating the POC value of the top field/bottom field. In Fig. 9F, "TopFieldOrderCnt" represents the POC value of the top field and "BottomFieldOrderCnt" represents the POC value of the bottom field.

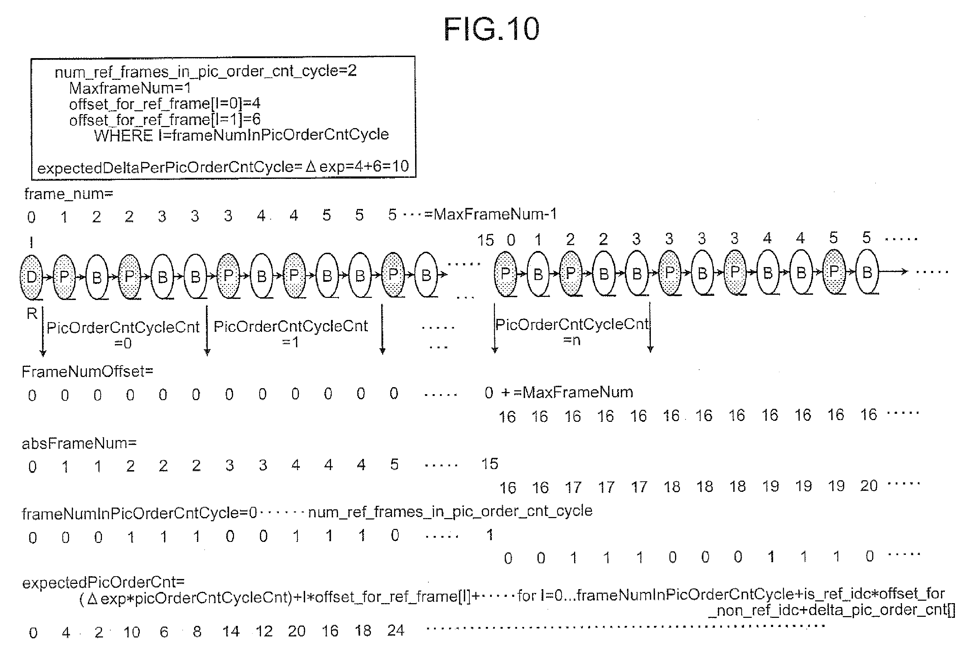

In Figs. 9A to 9F, "nal_unit_type", "frame_num", "MaxFrameNum", "num_ref_frames_in_pic_order_cnt_cycle", "nal_ref_idc", "offset_for_ref_frame[i]", "offset_for_non_ref_pic", "field_pic_flag", "delta_pic_order_cnt[0]", "delta_pic_order_cnt[1]", "bottom_field_flag", and "offset_for_top_to_bottom_field" are obtained from the syntax of the encoded image data. Fig. 10 depicts an exemplary calculation of a POC.

In the conventional POC calculation, as illustrated in Fig. 9A, the frame number offset is first set to be zero when an IDR frame is present and, for each of the subsequent frames, the frame number offset of the immediately previous frame is set as its frame number offset when the frame number is equal to or larger than the immediately previous frame number.

However, when the decoding is started from a random access point, a problem arises that a POC is not able to be correctly calculated. The "random access point" is a position at which information that enables the random access is included. When the random access may be executed, additional information indicating a recovery point (RPSEI: Recovery Point Supplemental Enhancement Information) is used. The RPSEI (Recovery Point SEI) is complementary information that enables the decoder to correctly decode frames at and after the recovery point.

That is, even in the case where correct decoding is attempted from the recovery point using the RPSEI, when the random access is executed, the frame number offset initially is not correctly set because the frame number offset of the immediately previous frame is unknown. Therefore, the value of the absolute frame number is not correctly calculated and the frame number within the POC cycle is not correctly calculated. As a result, no correct access is able to be made to the offset list and the POC is not able to be correctly decoded. Therefore, to correctly decode a POC, the frame number offset needs to initially be correctly set and the frame number within the POC cycle needs to be correctly calculated.

### SUMMARY

It is an object of the present invention to at least partially solve the problems in the conventional technology.

According to one aspect of an embodiment, an encoding apparatus encodes a picture order count (POC) while inserting a recovery point, and the encoding apparatus includes an insertion permission/rejection determining unit that determines whether a frame to be encoded is a reference frame and its frame number from an instantaneous decoding refresh frame is a positive integer times as large as a number of reference frames within a POC cycle, and a recovery point inserting unit that inserts a recovery point into the frame when the insertion permission/rejection determining unit determines that the frame is a reference frame and its frame number from the instantaneous decoding refresh frame is a positive integer times as large as the number of reference frames within the POC cycle.

According to another aspect of an embodiment, a decoding apparatus decodes a moving image whose POC is encoded while a recovery point is inserted, and the decoding apparatus includes a POC decoding unit that decodes the POC by executing an initializing process such that a frame number within a POC cycle used in decoding the POC becomes zero, when decoding by random accessing is started.

According to still another aspect of an embodiment, a moving image processing method includes encoding a moving image by encoding a picture order count (POC) while inserting a recovery point. The encoding includes determining, for a frame to be encoded, whether the frame is a reference frame and its frame number from an instantaneous decoding refresh frame is a positive integer times as large as a number of reference frames within a POC cycle, and inserting the recovery point into the frame when it is determined in the determining that the frame is a reference frame and its frame number from the instantaneous decoding refresh frame is a positive integer times as large as the number of reference frames within the POC cycle. The moving image processing method further includes decoding the moving image that is encoded in the encoding. The decoding includes further decoding the POC by executing an initializing process such that a frame number within the POC cycle used in decoding the POC becomes zero, when decoding by random accessing is started.

According to still another aspect of an embodiment, a moving image processing system includes an encoding apparatus that encodes a moving image by encoding a picture order count (POC) while inserting a recovery point. The encoding apparatus includes an insertion permission/rejection determining unit that determines, for a frame to be encoded, whether the frame is a reference frame and its frame number from an instantaneous decoding refresh frame is a positive integer times as large as a number of reference frames within a POC cycle, and a recovery point inserting unit that inserts the recovery point into the frame when the insertion permission/rejection determining unit determines that the frame is a reference frame and its frame number from the instantaneous decoding refresh frame is a positive integer times as large as the number of reference frames within the POC cycle. The moving image processing system further includes a decoding apparatus that decodes the moving image that is encoded by the encoding apparatus, and the decoding apparatus includes a POC decoding unit that decodes the POC by executing an initializing process such that the frame number within the POC cycle used in decoding the POC becomes zero, when decoding by random accessing is started.

According to still another aspect of an embodiment, a computer program product has a computer readable medium including programmed instructions for encoding a moving image by encoding a picture order count (POC) while inserting a recovery point. When the instructions are executed by a computer, the instructions cause the computer to perform determining, for a frame to be encoded, whether the frame is a reference frame and its frame number from an instantaneous decoding refresh frame is a positive integer times as large as a number of reference frames within a POC cycle, and inserting the recovery point into the frame when it is determined in the determining that the frame is a reference frame and its frame number from the instantaneous decoding refresh frame is a positive integer times as large as the number of reference frames within the POC cycle.

According to still another aspect of an embodiment, a computer program product has a computer readable medium including programmed instructions for decoding a moving image whose picture order count (POC) is encoded while a recovery point is inserted. When the instructions are executed by a computer, the instructions cause the computer to perform decoding the POC by executing an initializing process such that a frame number within a POC cycle used in decoding the POC becomes zero, when decoding by random accessing is started.

Additional objects and advantages of the invention will be set forth in part in the description which follows, and in part will be obvious from the description, or may be learned by practice of the invention. The object and advantages of the invention will be realized and attained by means of the elements and combinations particularly pointed out in the appended claims.

It is to be understood that both the foregoing general description and the following detailed description are exemplary and explanatory only and are not restrictive of the invention, as claimed.

### BRIEF DESCRIPTION OF DRAWINGS

Fig. 1 is an explanatory view of RPSEI inserting position limit by an encoder according to an embodiment;
Fig. 2 depicts configurations of the encoder and a decoder according to the embodiment;
Fig. 3 is a flowchart of process procedure of an encoding process by the encoder;
Fig. 4 is a flowchart of process procedure of a POC decoding process by a POC decoding unit;
Fig. 5 lists codes that correspond to a process at Step S10 of Fig. 4;
Fig. 6 is a chart of an exemplary calculation of a POC during random accessing;
Fig. 7 is a functional block diagram of a configuration of a computer that executes an encoding program according to the embodiment;
Fig. 8 is a flowchart of process procedure of a conventional POC decoding process;
Figs. 9A to 9F list codes of the conventional POC decoding process;
Fig. 10 depicts exemplary calculation of a POC; and
Fig. 11 is a chart of exemplary calculation of a POC during random accessing.

### DESCRIPTION OF EMBODIMENT(S)

Referring to the accompanying drawings, exemplary embodiments will now be explained in detail of an encoding apparatus, a decoding apparatus, a moving image processing method, a moving image processing system, an encoding program, and a decoding program according to the present invention. The "recovery point" used in claims indicates the RESEI.

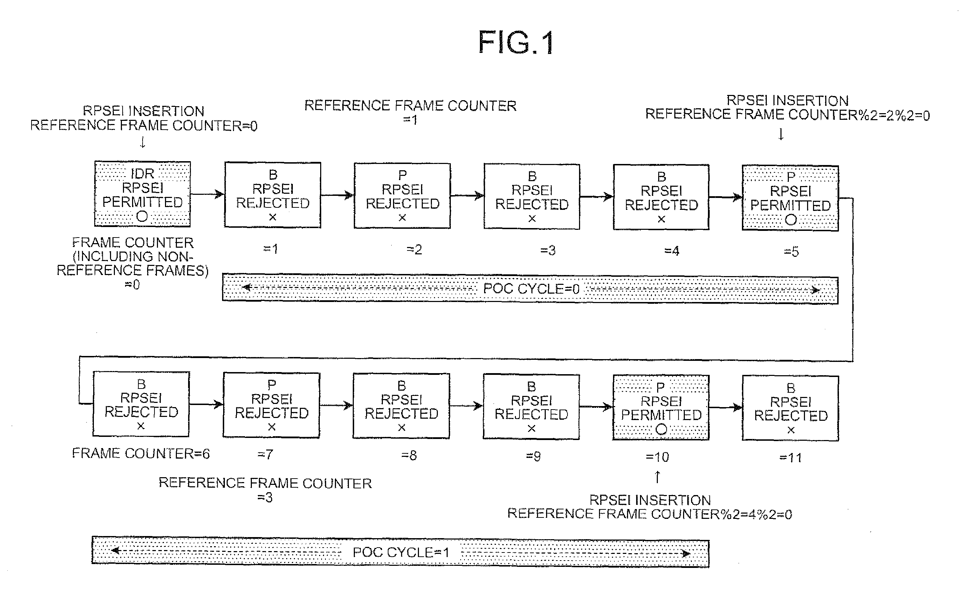

The RPSEI inserting position limit by an encoder according to the embodiment will hereinafter be explained. Fig. 1 is an explanatory view of the RPSEI inserting position limit by an encoder according to the embodiment. Fig. 1 illustrates a frame sequence that starts from an IDR frame and that continues as B, P, B, B, P, B, P, B, B, P, and B. In this case, "P" represents a reference frame and "B" represents a non-reference frame. A reference frame counter is a counter that counts the number of reference frames. A frame counter is a counter that counts the number of frames including the non-reference frames.

The encoder according to the embodiment inserts the RPSEI into only the reference frames whose reference frame counter value is an integer times (n times) as large as the number of the reference frames within the POC cycle or an integer times (n times) of an integer times (m times) as large as the number of the reference frames within the POC cycle.

In Fig. 1, the number of the reference frames within the POC cycle is two. Therefore, the encoder inserts the RPSEI into each of the reference frames whose reference frame counter values are an integer times (n=1, m=1) as large as two, that is, the reference frames whose reference frame counter values respectively are zero (the IDR frame), two, and four. Taking another example of the case where n=3 and m=1, the decoder inserts the RPSEI into each of the reference frames whose reference frame counter values respectively are zero, six, 12, 18,... and, when n=2 and M=5, the decoder inserts the RPSEI into each of the reference frames whose reference frame counter values respectively are zero, 20, 40, 60, and so on.

On the other hand, as explained later, when the decoder according to the embodiment first detects a frame with the RPSEI inserted thereinto other than the IDR frame, the decoder initializes the frame number offset to a value of the frame number, whose sign is inverted. As a result, for the next reference frame, the frame number within the POC cycle is able to be set to zero and the frame number within the POC cycle (frameNumInPicOrderCntCycle) is able to be set to a correct value that is zero. Thereby, relative to the first detected frame with the RPSEI (the recovery point SEI) inserted thereinto as a criterion (zero), the relative POC of each of all the subsequent frames is able to be correctly decoded.

In this manner, in the embodiment, the encoder limits the frames each with the RPSEI inserted thereinto, the decoder initially sets properly the frame number offset and, thereby, the POC is able to be correctly decoded even during the random accessing. Therefore, the decoder is able to correctly decode a moving image even when the decoder starts the decoding by the random accessing.

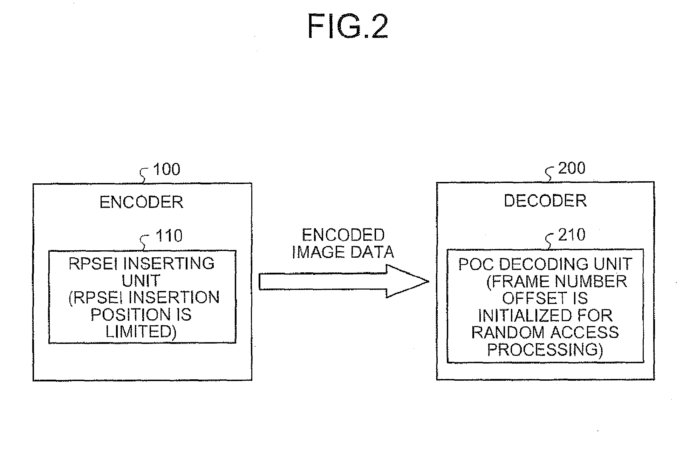

The configurations of the encoder and the decoder according to the embodiment will hereinafter be explained. Fig. 2 depicts the configurations of the encoder and the decoder according to the embodiment. As depicted in Fig. 2, an encoder 100 according to the embodiment includes an RPSEI inserting unit 110 and a decoder 200 includes a POC decoding unit 210.

The RPSEI inserting unit 110 is a processing unit that inserts RPSEI into a frame. The RPSEI inserting unit 110 inserts the RPSEI into only each of the reference frames, whose reference frame counter value is an integer times as large as the number of the reference frames within the POC cycle or an integer times (n times) of an integer times (m times) as large as the number of the reference frames within the POC cycle.

On the other hand, when the POC decoding unit 210 first detects a frame with the RPSEI inserted thereinto other than the IDR frame, the decoder initializes the frame number offset to a value of the frame number, whose sign is inverted.

In this manner, the RPSEI inserting unit 110 limits the positions to insert the RPSEI and the POC decoding unit 210 initially sets properly the frame number offset and, thereby, the POC is able to be correctly decoded even during the random accessing.

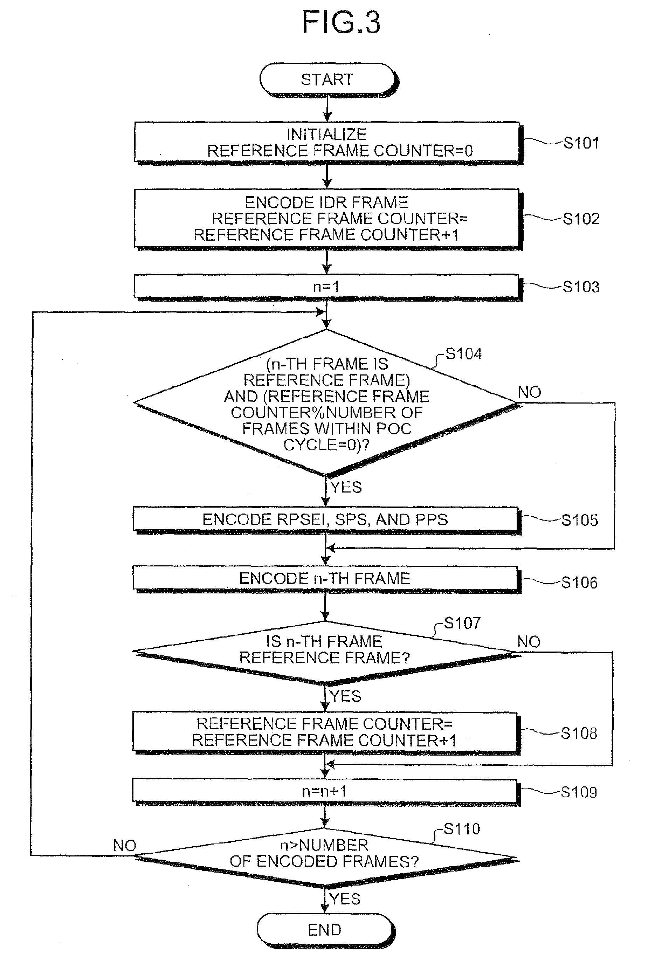

The process procedure of an encoding process by the encoder 100 will hereinafter be explained. Fig. 3 is a flowchart of the process procedure of the encoding process by the encoder 100. Each frame includes an SEI, an SPS (Sequence Parameter Set), a PPS (Picture Parameter Set), and a slice (frame data). However, the SEI, the SPS and the PPS are optional.

A case will hereinafter be explained where one IDR frame and a series of subsequent frames are encoded. By repeating the process procedure depicted in Fig. 3, image data including a plurality of IDRs is able to be encoded.

As depicted in Fig. 3, the encoder 100 first executes an initializing process necessary for the encoding process (Step S101). More specifically, determination of the frame reference structure, determination of the parameter values concerning the POC type 1, and initialization of variables such as the reference frame counter are executed.

The encoder 100 encodes the IDR frame and increments the reference frame counter by one (Step S102) and the encoder 100 initializes the variable "n" that represents the frame number and sets the variable "n" to one (Step S103). The encoder 100 determines whether an n-th frame is a reference frame and the remainder left by dividing the reference frame counter by the number of reference frames within the POC cycle is zero (Step S104).

As a result, when the n-th frame is a reference frame and the remainder left by dividing the reference frame counter by the number of reference frames within the POC cycle is zero, the encoder 100 encodes the RPSEI, the SPS, and the PPS (Step S105).

The encoder 100 encodes the n-th frame (Step S106) and determines whether the n-th frame is a reference frame (Step S107). As a result, when the n-th frame is a reference frame, the encoder 100 increments the reference frame counter by one (Step S108).

The encoder increments "n" by one (Step S109) and determines whether n is larger than the encoding frame number (Step S110). As a result, when n is not larger than the encoding frame number, the procedure returns to Step S104 and the next frame is processed. When n is larger than the encoding frame number, the encoding process comes to an end.

As above, the encoder 100 inserts the RPSEI into only each of the reference frames for which the remainder left by dividing its reference frame counter by the number of reference frames within the POC cycle is zero and, thereby, the decoder 100 is able to correctly decode the POC.

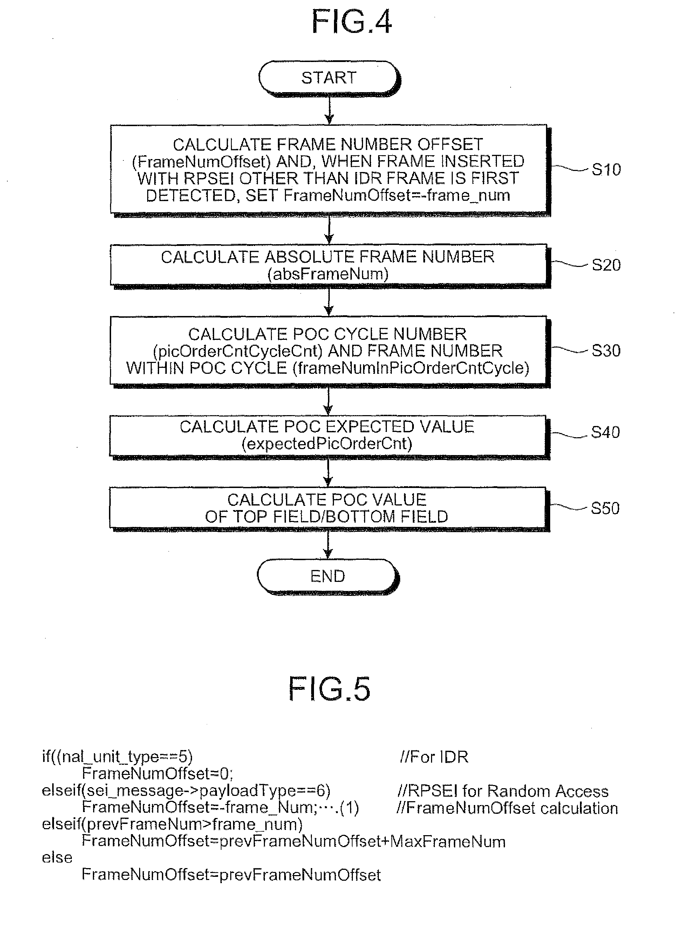

A POC decoding process by the POC decoding unit 210 will hereinafter be explained. Fig. 4 is a flowchart of the process procedure of the POC decoding process by the POC decoding unit 210. As depicted in Fig. 4, the POC decoding unit 210 calculates the frame number offset (FrameNumOffset) (Step S10).

However, when the POC decoding unit 210 first detects the RPSEI for a frame other than the IDR frame, the POC decoding unit 210 initializes the frame number offset to a value of the frame number, whose sign is inverted. Fig. 5 lists codes that correspond to a process at Step S10. In Fig. 5, "sei_message->payloadType==6" represents that the RPSEI is inserted and, in this case, "FrameNumOffset=-frame_Num" and the frame number offset are initialized as expressed in Equation (1).

The POC decoding unit 210 executes the processes of Steps S20 to S50. In Fig. 4, the processes of Steps S20 to S50 respectively correspond to the processes of Steps S2 to S5 of Fig. 8.

As above, when the POC decoding unit 210 first detects the RPSEI for a frame other than the IDR frame, the POC decoding unit 210 initializes the frame number offset to a value of the frame number, whose sign is inverted and, thereby, the POC is able to be correctly decoded.

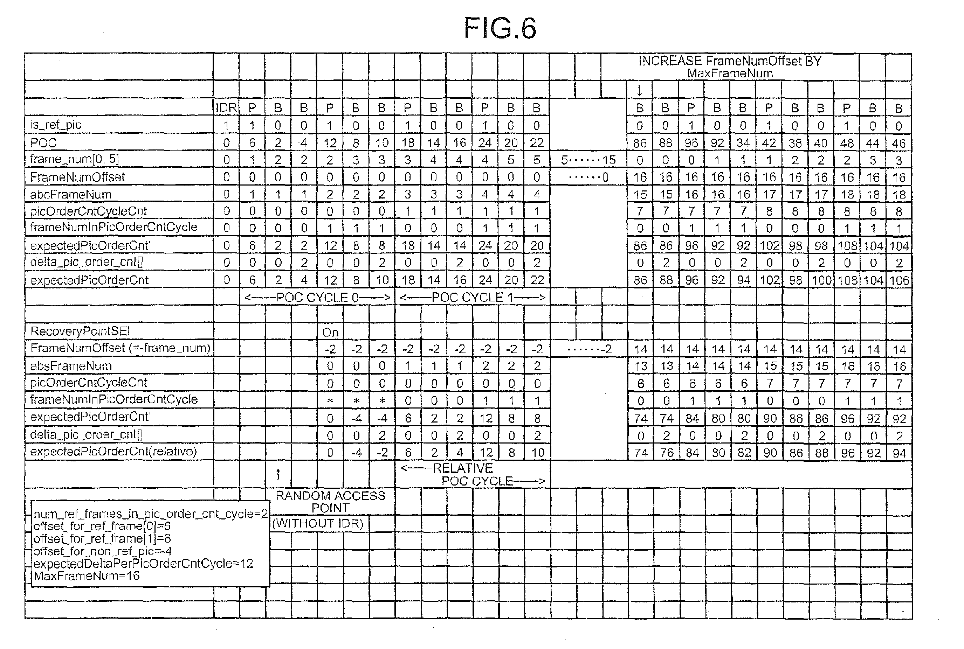

Fig. 6 is a chart of an exemplary calculation of a POC during random accessing. In this example, the RPSEI is first detected for a frame other than the IDR and the frame number offset (FrameNumOffset) is initialized to -2. For the next reference frame, zero is correctly calculated as the value of the frame number within the POC cycle (frameNumInPicOrderCntCycle). Though the POC value is set at a value that is decreased by 12 from the original value, the relative value between the frames is preserved.

As above, in the embodiment, the RPSEI inserting unit 110 of the encoder 100 limits the insertion position of the RPSEI and the POC decoding unit 210 of the decoder 200 initially sets properly the frame number offset and, thereby, the decoder 200 is able to correctly decode the POC even during the random accessing.

In the embodiment, as described above, the frame number offset is initialized to a value of the frame number, whose sign is inverted, when the RPSEI is first detected for a frame other than the IDR frame. However, to correctly calculate the frame number within the POC for the next reference frame, from Fig. 9C, "absolute frame number (absFrameNum)-1" only needs to be an integer times as large as the number of reference frames within the POC cycle (num_ref_frames_in_pic_order_cnt_cycle). Therefore, the frame number offset is also able to be initialized to a value obtained by multiplying the value of the frame number whose sign is inverted by a value an integer times as large as the number of reference frames within the POC cycle.
That is, instead of Equation (1) of Fig. 5,
"FrameNumOffset=-
frame_Num+M*num_ref_frames_in_pic_order_cnt_cycle" may be used, where M is an integer.

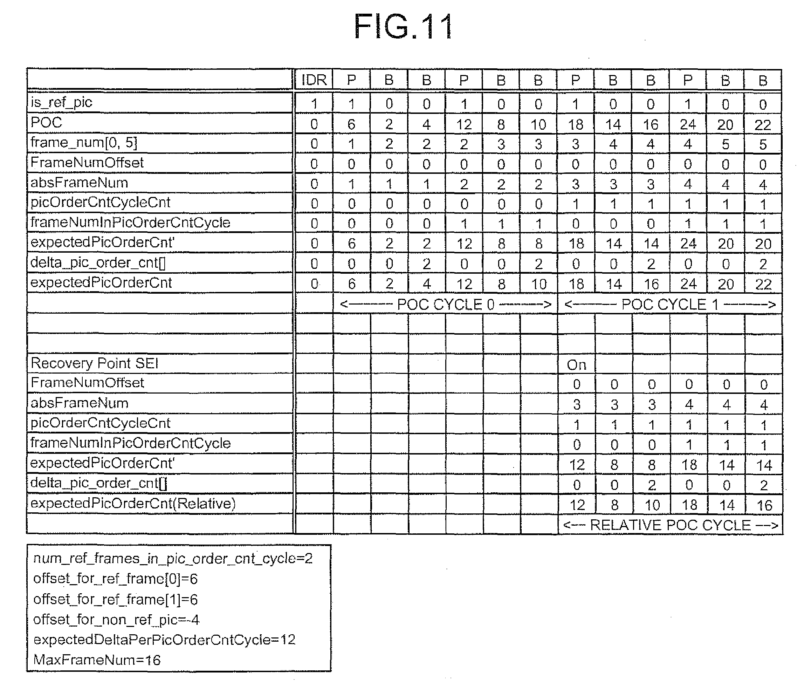

In the above embodiment, the frame number within a POC cycle is correctly calculated for the next reference frame of the reference frame for which the RPSEI is first detected. However, the frame number within a POC cycle is also able to be correctly calculated for the reference frame for which the RPSEI is first detected. More specifically, the RPSEI is inserted into only each of the reference frames whose value of the reference frame counter is one or larger for the encoder and for which the remainder left by dividing the "reference frame counter-1" by the value of the reference frame within the POC cycle is zero. The decoder uses FrameNumOffset=num_ref_frames_in_pic_order_cnt_cycle-frame_num+1 instead of Equation (1) of Fig. 5 in the calculation of FrameNumOffset for the reference frame for which the RPSEI is first detected. Fig. 11 is a chart of exemplary calculation of a POC during the random accessing in the example.

In the embodiment, the encoder 100 and the decoder 200 are explained. However, by realizing by software the configuration that the encoder 100 or the decoder 200 has, an encoding program or a decoding program having the same function is able to be obtained. A computer that executes the encoding program will hereinafter be described. The decoding program is able to be executed by a computer having the same configuration.

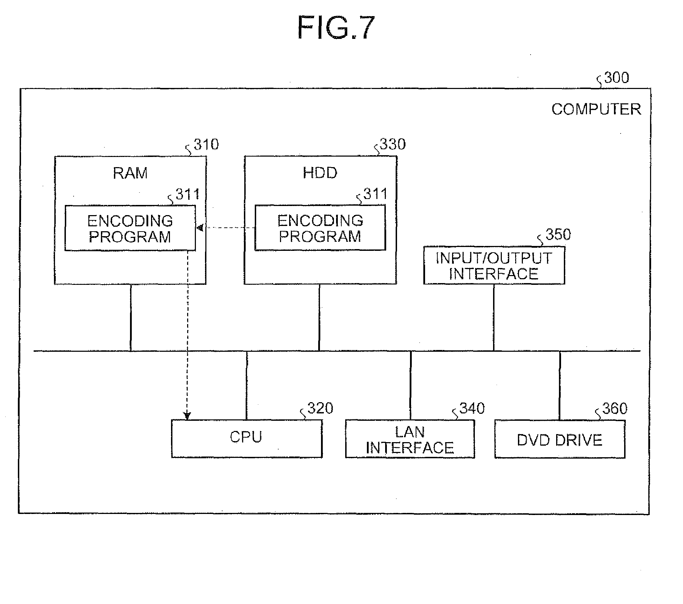

Fig. 7 is a functional block diagram of the configuration of a computer that executes an encoding program according to the embodiment. As depicted in Fig. 7, a computer 300 includes a RAM 310, a CPU 320, an HDD 330, a LAN interface 340, an input/output interface 350, and a DVD drive 360.

The RAM 310 is a memory that stores therein programs, intermediate results of the execution of each of a program, etc. The CPU 320 is a central processing unit that reads a program from the RAM 310 and executes the program. The HDD 330 is a disc apparatus that stores therein the programs and data. The LAN interface 340 is an interface to connect the computer 300 to another computer through a LAN. The input/output interface 350 is an interface to connect an input apparatus such as a mouse or a keyboard and a displaying apparatus. The DVD drive 360 is an apparatus that reads from and writes into a DVD.

An encoding program 311 that is executed on the computer 300: is stored in a DVD; is read from the DVD by the DVD drive 360; and is installed in the computer 300. Otherwise, the encoding program 311 is stored in a database, etc., of another computer system that is connected through the LAN interface 340, is read from the database, and is installed in the computer 300. The installed encoding program 311 is stored in the HDD 330, is read by the RAM 310, and is executed by the CPU 320.

According to an embodiment of the present invention, the recovery point is inserted when it is determined that a frame to be encoded is a reference frame and its frame number from an instantaneous decoding refresh frame is a positive integer times as large as the number of reference frames within a POC cycle. Therefore, the decoding apparatus can correctly decode a POC even during random accessing.

A method, an apparatus, a system, a computer program, a recording medium, a data structure, etc., applied with the elements, expressions, or any arbitrary combination of the elements of the present invention are also effective to solve the above problems.

According to an embodiment of the present invention, an advantageous effect can be obtained that a moving image is able to be correctly decoded because a POC is able to be correctly decoded even during random accessing.

All examples and conditional language recited herein are intended for pedagogical purposes to aid the reader in understanding the principles of the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present invention has(have) been described in detail, it should be understood that the various changes, substitutions, and alterations could be made hereto without departing from the spirit and scope of the invention.

## Claims

1. An encoding apparatus that encodes a picture order count (POC) while inserting a recovery point, the apparatus comprising:
an insertion permission/rejection determining unit that determines whether a frame to be encoded is a reference frame and its frame number from an instantaneous decoding refresh frame is a positive integer times as large as a number of reference frames within a POC cycle; and
a recovery point inserting unit that inserts a recovery point into the frame when the insertion permission/rejection determining unit determines that the frame is a reference frame and its frame number from the instantaneous decoding refresh frame is a positive integer times as large as the number of reference frames within the POC cycle.

2. A decoding apparatus that decodes a moving image whose picture order count (POC) is encoded while a recovery point is inserted, the apparatus comprising
a POC decoding unit that decodes the POC by executing an initializing process such that a frame number within a POC cycle used in decoding the POC becomes zero, when decoding by random accessing is started.

3. The decoding apparatus according to claim 2, wherein
when the POC decoding unit first detects the recovery point for a frame other than an instantaneous decoding refresh frame, the POC decoding unit executes an initializing process such that the frame number within the POC cycle becomes zero, by initially setting a frame number offset to a value obtained by adding a value of a frame number from an instantaneous decoding refresh frame, whose sign is inverted, and a value that is an integer times as large as a number of reference frames within the POC cycle.

4. A moving image processing method comprising:
encoding a moving image by encoding a picture order count (POC) while inserting a recovery point, the encoding including
determining, for a frame to be encoded, whether the frame is a reference frame and its frame number from an instantaneous decoding refresh frame is a positive integer times as large as a number of reference frames within a POC cycle, and
inserting the recovery point into the frame when it is determined in the determining that the frame is a reference frame and its frame number from the instantaneous decoding refresh frame is a positive integer times as large as the number of reference frames within the POC cycle; and
decoding the moving image that is encoded in the encoding, the decoding including
further decoding the POC by executing an initializing process such that a frame number within the POC cycle used in decoding the POC becomes zero, when decoding by random accessing is started.

5. A moving image processing system comprising:
an encoding apparatus that encodes a moving image by encoding a picture order count (POC) while inserting a recovery point, the encoding apparatus including
an insertion permission/rejection determining unit that determines, for a frame to be encoded, whether the frame is a reference frame and its frame number from an instantaneous decoding refresh frame is a positive integer times as large as a number of reference frames within a POC cycle, and
a recovery point inserting unit that inserts the recovery point into the frame when the insertion permission/rejection determining unit determines that the frame is a reference frame and its frame number from the instantaneous decoding refresh frame is a positive integer times as large as the number of reference frames within the POC cycle; and
a decoding apparatus that decodes the moving image that is encoded by the encoding apparatus, the decoding apparatus including
a POC decoding unit that decodes the POC by executing an initializing process such that the frame number within the POC cycle used in decoding the POC becomes zero, when decoding by random accessing is started.

6. A computer program product having a computer readable medium including programmed instructions for encoding a moving image by encoding a picture order count (POC) while inserting a recovery point, wherein the instructions when executed by a computer, cause the computer to perform:
determining, for a frame to be encoded, whether the frame is a reference frame and its frame number from an instantaneous decoding refresh frame is a positive integer times as large as a number of reference frames within a POC cycle; and
inserting the recovery point into the frame when it is determined in the determining that the frame is a reference frame and its frame number from the instantaneous decoding refresh frame is a positive integer times as large as the number of reference frames within the POC cycle.

7. A computer program product having a computer readable medium including programmed instructions for decoding a moving image whose picture order count (POC) is encoded while a recovery point is inserted, wherein the instructions when executed by a computer, cause the computer to perform:
decoding the POC by executing an initializing process such that a frame number within a POC cycle used in decoding the POC becomes zero, when decoding by random accessing is started.
